# EUROPEAN PATENT SPECIFICATION

(11) **EP 2 725 858 B1**
(45) Date of publication and mention of the grant of the patent: **13.06.2018**
(21) Application number: 12360074.4
(22) Date of filing: 29.10.2012
(51) Int. Cl.: H04W 68/12, H04W 4/00, H04W 48/08

(54) **NETWORK NODE, USER EQUIPMENT AND METHODS**
NETZWERKKNOTEN, BENUTZERGERÄT UND VERFAHREN
NOEUD DE RÉSEAU, ÉQUIPEMENT UTILISATEUR ET PROCÉDÉS

(43) Date of publication of application: 30.04.2014
(73) Proprietor: Alcatel Lucent, 91620 Nozay (FR)
(72) Inventor: Casati, Alessio, Wiltshire SN5 6EE (GB); Palat, Sudeep, Wiltshire SN5 6EE (GB)
(74) Representative: Sarup, David Alexander

(56) References cited:
- WO-A1-2011/160682
- US-A1- 2004 058 717
- US-A1- 2005 186 906
- US-A1- 2010 153 762
- RESEARCH IN MOTION ET AL: "Access Network Discovery and Selection in IFOM", 3GPP DRAFT; S2-101396, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 February 2010 (2010-02-16), XP050433912, [retrieved on 2010-02-16]

## Description

### FIELD OF THE INVENTION

The present invention relates to a network node method, a network node, a user equipment method, user equipment and computer program products.

### BACKGROUND

Wireless telecommunications networks are known. Different radio access technologies may be used within a wireless telecommunications network such as, for example, different cellular radio access technologies which support different cellular radio access networks (such as the global system for mobile communications (GSM), the universal mobile telecommunications system (UMTS) or the long term evolution system (LTE), to name a few). In such cellular systems, radio coverage is provided using an appropriate radio access technology to provide a radio access network within regions of geographical area known as cells. A base station is located in each cell or group of cells to provide radio coverage.

It is common to find different radio access technologies provided by the same or different operators either in the same or different geographical area. It is common, therefore, for user equipment to be provided with interfaces to support different radio access technologies. For example, it is common for user equipment which support LTE to also support UMTS and GSM.

Likewise, it is common for other radio access technologies to provide, for example, a wireless local area network using, for example, WiMAX or Wi-Fi which provide alternative or additional communication links which can be utilised by user equipment to send and transmit data. Accordingly, it is known to provide user equipment with the appropriate interfaces to support other radio access technologies to provide access to, for example, a wireless local area network using, for example, Wi-Fi or WiMAX interfaces.

Although providing multiple radio access technologies that may be utilised for communication with the user equipment provides for flexibility and can improve coverage and the data speeds for the user, unexpected consequences can occur. Accordingly, it is desired to provide an improved technique for user equipment in a multiple radio access technology environment.

US2005/0186906 discloses a home network system where a plurality of local devices can connect via WLAN and Bluetooth. The devices use the Bluetooth bearer as a control channel to stay connected to the home network. In case a connection is requested from a mobile device, the request is sent via the Bluetooth channel the WLAN interface is triggered and further connections are carried out via WLAN.

US2010/0153762 discloses a method of low power discovery that seeks to extend the battery life of a portable media player by ensuring that the WLAN can wake up based on a predetermined trigger in some cases sent via Bluetooth.

WO2011/160682 discloses an access network connection controller for ordering a mobile terminal (UE) to switch from a connection to a first access network to a connection to a second access network. The access network connection controller receives movement information indicating that the UE is approaching a place where connection to a second network may be beneficial and generates an ANDSF (access network delivery and selection function) command in response to this. The command is sent via the S14 interface in the control plane which is a direct interface between the UE and an ANDSF server through an IP network.

### SUMMARY

According to a first aspect, there is provided a network node method, comprising: transmitting, using a first radio access technology communication link with user equipment, said first radio access technology communication link currently being used for at least one packet data network connection by said user equipment, a notification message notifying said user equipment that a second radio access technology communication link is available in a vicinity of said user equipment for communication of user data between said user equipment and a network node supporting said second radio access technology communication link, wherein said notification message instructs said user equipment to activate transceiver logic within said user equipment used to support said second radio access technology communication link; and said notification message instructs said user equipment to reallocate at least one of said at least one packet data network connection associated with said first radio access technology communication link to said second radio access technology communication link.

The first aspect recognises that a problem with supporting multiple radio access technologies is determining when to utilise each of those radio access technologies. In particular, in order to determine whether a particular radio access technology can be utilised, it may be necessary to maintain in an active state the interface within the user equipment which is able to determine whether communication can be supported using that radio access technology. That is to say, if it is desired to be able to utilise a particular radio access technology, then it maybe necessary for the interface within the user equipment which can utilise that radio access technology to remain active. This enables the interface to determine whether signals can be transmitted and received using that radio access technology. However, the first aspect also recognises that a problem with this approach is that having interfaces associated with more than one radio access technology consumes power which reduces the battery life of the user equipment. Also, the activation of the interface for particular radio access technologies maybe unnecessary, particularly when the user equipment is in a region for which there is no coverage for that radio access technology.

Accordingly, a network node method is provided. The method may comprise transmitting a notification message to user equipment using a first radio access technology communication link. The notification may notify the user equipment that a second radio access technology communication link is available in the area within which the user equipment is currently located. That second radio access technology communication link may be utilised for the communication of user data between the user equipment and a network node which supports that second radio access technology communication link. In this way, the user equipment can be made aware that other radio access technologies are available without needing to activate the interfaces associated with those other radio access technologies. Instead, the interfaces for those other radio access technologies may remain inactive in order to reduce power consumption and conserve battery life. The user equipment is notified using the radio access technology which it is currently using that other radio access technologies may be used.

The notification message instructs the user equipment to reallocate at least one packet data network connection associated with the first radio access technology communication link to the second radio access technology communication link. Accordingly, the notification message may also indicate that current connections or links that may be utilising the first radio access technology should instead switch or be steered onto the second radio access technology.

The notification message instructs the user equipment to activate transceiver logic within the user equipment used to support the second radio access technology communication link. Accordingly, the message may cause the user equipment to automatically activate the interface associated with the other radio access technology in order to establish a communications link.

In one embodiment, the notification message is receivable by the user equipment whilst the transceiver logic within the user equipment used to support the second radio access technology communication link is inactive. Accordingly, it can be seen that the notification may be received by the user equipment even whilst the transceiver logic of the interface associated with the other radio access technology remains inactive.

In one embodiment, the notification message instructs the user equipment to utilise the second radio access technology communication link. Accordingly, the notification message may instruct the user equipment to automatically utilise the other radio access technology communication link.

In one embodiment, the notification message specifies characteristic information associated with the second radio access technology communication link. Accordingly, the notification message may provide the appropriate characteristic or configuration information required to establish a communication using the other radio access technology.

In one embodiment, the notification message specifies which of the at least one packet data network connections associated with the first radio access technology communication link to reallocate to the second radio access technology communication link. Accordingly, the notification message may also indicate which of the current connections or links that may be utilising the first radio access technology should instead switch or be steered onto the second radio access technology.

In one embodiment, the notification message specifies which of at least one of a network local offload and an evolved packet system mobility mode to utilise for the at least one packet data network connection.

In one embodiment, the method comprises receiving a capability indication for the user equipment indicating that it supports communication using the second radio access technology communication link and the step of transmitting occurs in response to the step of receiving. Accordingly, the user equipment may indicate to the network utilising the first radio access technology that it also supports other radio access technologies and the notification message may be sent in response to receiving this capability indication.

In one embodiment, the notification message notifies the user equipment that a second radio access technology communication link which the capability indication indicates that the user equipment is capable of supporting is available in the vicinity of the user equipment.

In one embodiment, the capability indication is received during at least one of an attach request procedure and a service request procedure between the user equipment and the network node supporting the first radio access technology communication link. Accordingly, the capability indication may be provided as part of an attach request procedure or as part of a service request procedure which occurs between the user equipment and the network node which supports the first radio access technology.

In one embodiment, the method comprises determining whether the user equipment is within a vicinity of the second radio access technology communication link and the step of transmitting occurs in response to determining that the user equipment is within the vicinity of the second radio access technology communication link. Hence, the network node may determine that the user equipment is within the vicinity of a coverage area provided by the second radio access technology and then transmit the notification message.

In one embodiment, the method comprises determining whether the user equipment is within a vicinity of the second radio access technology communication link based on location information relating to the user equipment. Accordingly, the user equipment may provide information relating to its location to the network node.

In one embodiment, the location information comprises at least one of geographical co-ordinates of the user equipment and information relating to characteristics of communications links receivable by the user equipment. Accordingly, the user equipment may provide geographical coordinates using, for example, a Global Positioning System (GPS) device or may provide information relating to the characteristics of communication links which are receivable by the user equipment, such as, for example, a radio frequency fingerprint which may be utilised by the network node to determine an approximate location of the user equipment.

In one embodiment, the notification message notifies the user equipment that a second radio access technology communication link is available in the vicinity of the user equipment which location information indicates that the user equipment is capable of supporting. Accordingly, the notification message may be user equipment specific.

In one embodiment, the notification message notifies the user equipment that a second radio access technology communication link is available within a specified area. Accordingly, the notification message may be user equipment specific and provide further information providing details of the coverage area of the other radio access technology, or may be a broadcast message which is receivable by all user equipment currently being supported by that network node.

In one example, the first radio access technology comprises a cellular network communication link and the second radio access technology comprises a non-cellular network communication link.

In one example, the cellular network communication link comprises at least one of a GSM, UMTS and LTE communications link.

In one example the non-cellular communication link comprises at least one of a Wi-Fi, WiMAX and a wireless local area network.

According to a second aspect, there is provided a network node, comprising: transmission logic operable to transmit, using a first radio access technology communication link with user equipment, said first radio access technology communication link currently being used by said user equipment for at least one packet data network connection, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one of said at least one packet data network connection associated with said first radio access technology communication link to said second radio access technology communication link.

In one embodiment, the notification message instructs the user equipment to activate transceiver logic within the user equipment used to support the second radio access technology communication link.

In one embodiment, the notification message is receivable by the user equipment whilst the transceiver logic within the user equipment used to support the second radio access technology communication link is inactive.

In one embodiment, the notification message instructs the user equipment to utilise the second radio access technology communication link.

In one embodiment, the notification message specifies characteristic information associated with the second radio access technology communication link.

In one embodiment, the notification message specifies which of the at least one packet data network connections associated with the first radio access technology communication link to reallocate to the second radio access technology communication link.

In one embodiment, the notification message specifies which of at least one of a network local offload and an evolved packet system mobility mode to utilise for the at least one packet data network connection.

In one embodiment, the user equipment comprises reception logic operable to receive a capability indication for the user equipment indicating that it supports communication using the second radio access technology communication link and the transmission logic is operable to transmit in response to reception of the capability indication.

In one embodiment, the notification message notifies the user equipment that a second radio access technology communication link which the capability indication indicates that the user equipment is capable of supporting is available in the vicinity of the user equipment.

In one embodiment, the capability indication is received during at least one of an attach request procedure and a service request procedure between the user equipment and the network node supporting the first radio access technology communication link.

In one embodiment, the user equipment comprises determining logic operable to determine whether the user equipment is within a vicinity of the second radio access technology communication link and the transmission logic is operable to transmit in response to the determining logic determining that the user equipment is within the vicinity of the second radio access technology communication link.

In one embodiment, the user equipment comprises determining logic operable to determine whether the user equipment is within a vicinity of the second radio access technology communication link based on location information relating to the user equipment.

In one embodiment, the location information comprises at least one of geographical co-ordinates of the user equipment and information relating to characteristics of communications links receivable by the user equipment.

In one embodiment, the notification message notifies the user equipment that a second radio access technology communication link is available in the vicinity of the user equipment which location information indicates that the user equipment is capable of supporting.

In one embodiment, the notification message notifies the user equipment that a second radio access technology communication link is available within a specified area.

In one example, the first radio access technology comprises a cellular network communication link and the second radio access technology comprises a non-cellular network communication link.

In one example, the cellular network communication link comprises at least one of a GSM, UMTS and LTE communications link.

In one example, the non-cellular communication link comprises at least one of a Wi-Fi, WiMAX and a wireless local area network.

According to a third aspect, there is provided a user equipment method, comprising: receiving, using a first radio access technology communication link with a network node, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one packet data network connection associated with said first radio access technology communication link to said second radio access technology communication link.

In one embodiment, the notification message is receivable by the user equipment whilst the transceiver logic within the user equipment used to support the second radio access technology communication link is inactive.

In one embodiment, the notification message instructs the user equipment to utilise the second radio access technology communication link.

In one embodiment, the notification message specifies characteristic information associated with the second radio access technology communication link.

In one embodiment, the notification message specifies which of the at least one packet data network connections associated with the first radio access technology communication link to reallocate to the second radio access technology communication link.

In one embodiment, the notification message specifies which of at least one of a network local offload and an evolved packet system mobility mode to utilise for the at least one packet data network connection.

In one embodiment, the method comprises transmitting a capability indication for the user equipment indicating that it supports communication using the second radio access technology communication link.

In one embodiment, the notification message notifies the user equipment that a second radio access technology communication link which the capability indication indicates that the user equipment is capable of supporting is available in the vicinity of the user equipment.

In one embodiment, the capability indication is transmitted during at least one of an attach request procedure and a service request procedure between the user equipment and the network node supporting the first radio access technology communication link. In one embodiment, the notification message notifies the user equipment that a second radio access technology communication link is available within a specified area.

In one embodiment, the method comprises reverting to the first radio access technology communication link when the second radio access technology communication link ceases to be available.

In one example, the first radio access technology comprises a cellular network communication link and the second radio access technology comprises a non-cellular network communication link.

In one example, the cellular network communication link comprises at least one of a GSM, UMTS and LTE communications link.

In one example, the non-cellular communication link comprises at least one of a Wi-Fi, WiMAX and a wireless local area network.

According to a fourth aspect, there is provided user equipment, comprising: reception logic operable to receive, using a first radio access technology communication link that said user equipment is currently using with a network node, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one packet data network connection associated with said first radio access technology communication link to said second radio access technology communication link.

In one embodiment, the notification message is receivable by the user equipment whilst the transceiver logic within the user equipment used to support the second radio access technology communication link is inactive.

In one embodiment, the notification message instructs the user equipment to utilise the second radio access technology communication link.

In one embodiment, the notification message specifies characteristic information associated with the second radio access technology communication link.

In one embodiment, the notification message specifies which of the at least one packet data network connections associated with the first radio access technology communication link to reallocate to the second radio access technology communication link.

In one embodiment, the notification message specifies which of at least one of a network local offload and an evolved packet system mobility mode to utilise for the at least one packet data network connection.

In one embodiment, the user equipment comprises transmission logic operable to transmit a capability indication for the user equipment indicating that it supports communication using the second radio access technology communication link.

In one embodiment, the notification message notifies the user equipment that a second radio access technology communication link which the capability indication indicates that the user equipment is capable of supporting is available in the vicinity of the user equipment.

In one embodiment, the capability indication is transmitted during at least one of an attach request procedure and a service request procedure between the user equipment and the network node supporting the first radio access technology communication link.

In one embodiment, the notification message notifies the user equipment that a second radio access technology communication link is available within a specified area.

In one embodiment, the user equipment comprises logic operable to revert to the first radio access technology communication link when the second radio access technology communication link ceases to be available.

In one example, the first radio access technology comprises a cellular network communication link and the second radio access technology comprises a non-cellular network communication link.

In one example, the cellular network communication link comprises at least one of a GSM, UMTS and LTE communications link.

In one example, the non-cellular communication link comprises at least one of a Wi-Fi, WiMAX and a wireless local area network.

According to a fifth aspect, there is provided a computer program product operable, when executed on a computer, to perform the method steps of the first of the third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Aspects of the present invention will now be described further, with reference to the accompanying drawings, in which:
Figure 1 illustrates an example deployment scenario in which wireless local area network hotspots are provided in cells;
Figure 2 illustrates the message flow between the user equipment and the network during an attach procedure;
Figure 3 illustrates the message flow between the user equipment and the network during a service request;
Figure 4 shows an arrangement where the cells that contain wireless local area network hotspots broadcast the presence of those hotspots to user equipment within the coverage area of those cells; and
Figure 5 illustrates the message flow between the user equipment and the network when the cell informs the user equipment that it is in proximity to a wireless local area network hotspot using dedicated signalling.

### DESCRIPTION

### Overview

Before discussing the aspects in any more detail, first an overview will be provided. As mentioned above, various different radio access technologies can be utilised to access various different radio access networks or wireless networks. These different networks and technologies may be considered to be heterogeneous in that they may be provided by different operators, operating with different protocols, and requiring different hardware and software in order to communicate using communication links provided by those different technologies.

Communication equipment is emerging which seeks to integrate different radio access technologies in order to enhance coverage to users and optimize use of spectrum. For example, devices exist which integrate both cellular and Wi-Fi capabilities. In particular, femto or small cell base stations support both cellular and wireless local area network radio access technologies in order to enhance network capacity and improve coverage. As operators attempt to optimize the use of licensed spectrum, an efficient use of wireless local area networks can help achieve that aim. Likewise, user equipment exists which support both cellular and wireless local area network technologies.

One of the drawbacks of supporting multiple radio access technologies is that, in order that the user equipment can detect when different radio access technology options exist, it is necessary for the user equipment to keep the hardware for each of these different radio access technologies active, which results in additional power consumption. Embodiments recognise that if the user equipment can find ways to activate the hardware associated with a particular radio access technology only when it has some confidence that it can utilise that radio access technology, then this would be extremely beneficial and could lead to significant power savings whilst also providing the benefits of still being able to utilise those different radio access technologies when it is possible to do so. Accordingly, an indication may be provided via a radio access technology already being used by user equipment that other radio access technologies are available. This enables the hardware associated with those other radio access technologies to remain inactive until they may require to be used.

Embodiments also enable traffic to be steered between different radio access technologies when it is appropriate to do so and when it is detected that user equipment has the capability to support that radio access technology. For example, aspects provide that, as part of an attach procedure, the user equipment may declare those radio access technologies that it supports. Also, based on the information provided at the attach time, the network may instruct the user equipment when it should change radio access technologies, assuming the network can provide the user equipment with a positive indication that other radio access technologies are available, so that the user equipment can use those other radio access technologies to send or receive data. The network may also provide an explicit indication of which mobility mode of, for example, an evolved packet system, to use as it steers the user equipment to another radio access technology such as, for example, Wi-Fi.

In particular, a broadcast channel (such as a cellular broadcast channel) may be used to advertise another radio access technology (such as a wireless local area network) availability which is offered by the network operator, such as where the alternative radio access technology capability is hosted by the same radio access network node which is broadcasting its availability. An example of this may be that a cellular network operator may use a broadcast channel of a base station to inform user equipment being supported by that base station that the base station also provides a wireless local area network. Likewise, the broadcast channel of a base station may inform user equipment being supported by that base station that wireless local area networks are available within the coverage area supported by that base station. The location of the coverage of the other radio access technologies may be indicated in terms of geographical coordinates or, where overlapping coverage between radio access technologies is provided, this may be indicated such that user equipment receiving the broadcast channel of one radio access technology may use that as an indication that it is also within the coverage area of the radio access technology.

Additionally, or alternatively, an indication that another radio access technology is available may be indicated to specific user equipment individually. For example, as well as determining the location of user equipment based on geographical coordinates provided by the user equipment using, for example, a Global Positioning System device, the network can trigger the user equipment to provide a radio frequency fingerprint which may be correlated by the network in order to accurately place the user equipment in relation to the coverage areas of the different radio access technologies. The network may provide this information dedicated to the user equipment after determining that the user equipment location is close to a particular coverage area such as a wireless local area network hotspot.

In examples, at the attach time, user equipment may declare a capability to the network that it supports differing radio access technologies (such as the capability to support a wireless local area network). Either at attach time or when the user equipment performs a service request, the network may indicate to the user equipment that it should steer certain connections (such as specified packet data network connections or even all the bearers) to another radio access technology (such as Wi-Fi) if the radio access network node indicates that in the vicinity of the cell offering the existing service using one radio access technology is another radio access technology (such as a wireless local area network service). Parameters to enable the user equipment to establish a communication link using that different radio access technology may be explicitly provided at this time (such as signalling an SSID). The network may also indicate at this time whether, for example, non-seamless wireless local area network offload (as specified in section 4.1.5 of 3GPP TS 23.402) shall be used when using, for example, the wireless local area network or whether the user equipment should execute evolved packet system mobility procedures for some or all of the packet data network connections (for example, the network may indicate which packet data network connections should transfer to the other radio access technologies - such as Wi-Fi (specified by IEEE 802.11) - and indicate which packet data network connections should remain with the existing radio access technology - such as a cellular communication link - or whether access network discovery and selection function policies should be followed). The user equipment will then follow these instructions any utilise the different radio access technology whilst it remains available, but will revert to back to the original radio access technology (such as a cellular connection) when the different radio access technology (such as Wi-Fi) is not available.

In examples, if the user has deactivated a particular radio access technology (for example, the Wi-Fi adaptor is disabled) and the network indicates to use that radio access technology, then the user equipment may present to the user a pop-up screen to accept the switching on of that adaptor or, alternatively, the network may cause the user equipment to automatically override the user setting when connectivity using another radio access technology is available.

### WLAN hotspots within LTE cells

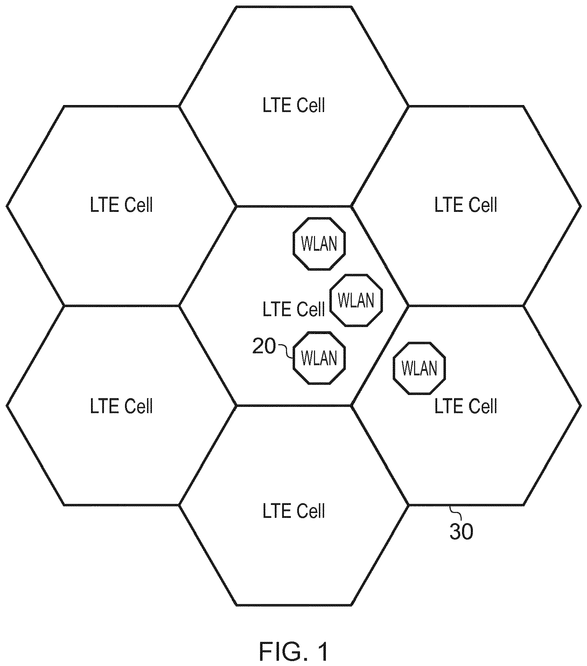

Figure 1 shows an example deployment scenario in which wireless local area network hotspots 20 are provided in certain cells (in this example, long term evolution (LTE) macro cells 30, although it will be understood that other radio access technologies may also by utilised). Each cell 30 will be supported by a macro base station (not shown). Typically, each wireless local area network 20 will be supported by a small cell base station or another access point (not shown). It will be appreciated that wireless local area networks 20 could also be provided by the macro base stations and that larger wireless local area networks could be provided that covered the same area as, for example, the cell 30. User equipment (not shown) roam throughout the network.

### Attach Procedure

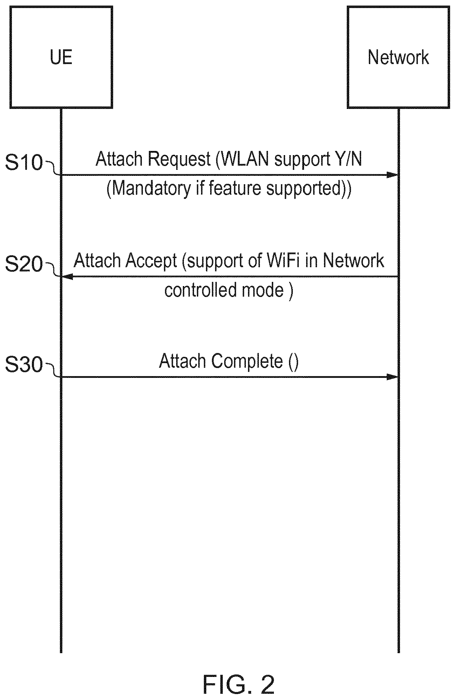

Figure 2 illustrates the message flow between the user equipment and the network during an attach procedure. As shown at step S10, in the evolved packet system (EPS) using, for example, the evolved universal mobile telecommunications system terrestrial radio access network (E-UTRAN) of the cell 30, the user equipment indicates at attach time to the network whether or not it is able to communicate using a wireless local area network (or other radio access technology). By indicating that the user equipment supports communication using a wireless local area network 20, this provides an implicit indication to the network that the user equipment will accept instructions from the network to steer traffic from the communications links provided by the cell 30 onto a wireless local area network 20.

At step S20, if the network supports controlled steering of connections from the cell 30 onto a wireless local area network 20, the network transmits an attach accept message to the user equipment indicating that it supports network controlled steering. Based on whether or not the user equipment receives the attach accept message from the network, the user equipment can then decide whether it can rely on network assistance or not in activating the Wi-Fi interface used for communication with the wireless local area network 20 so that the Wi-Fi interface is only utilised when the user equipment is likely to be in the vicinity of a wireless local area network 20. The attach accept message may indicate with connections should be steered onto the wireless local area network 20, when available.

If the user equipment does not receive an attach accept message, then the user may decide whether or not to activate the Wi-Fi interface. If the user equipment receives an attach accept message indicating that the network supports the Wi-Fi activation mode, then the user equipment may deactivate the Wi-Fi interface or leave it in the deactivated state and await a message from the network to activate the Wi-Fi interface.

At step S30, the user equipment transmits an attach complete message to the network.

### Service Request Procedure

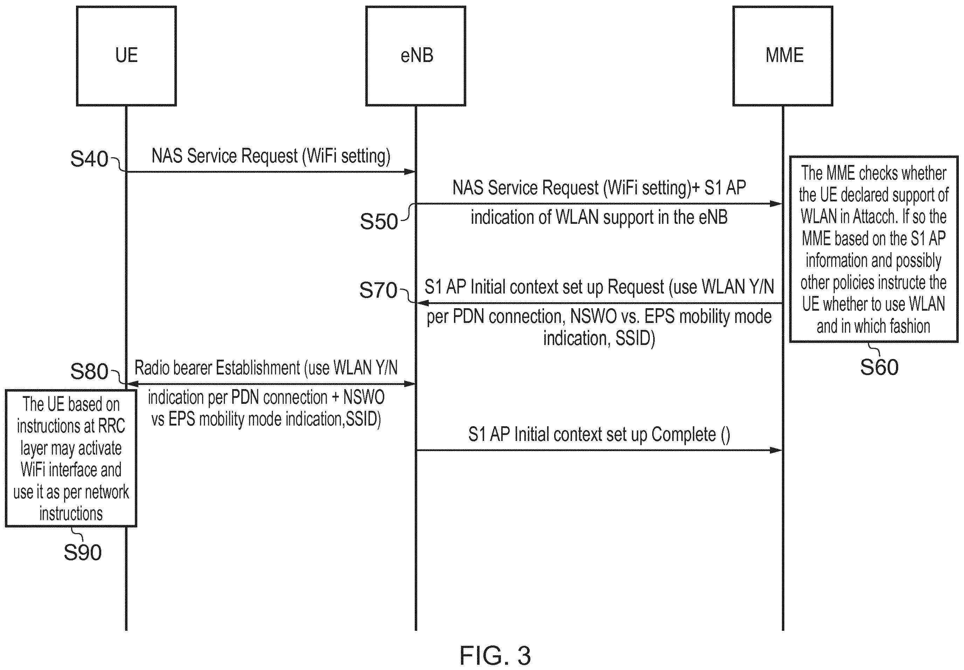

Figure 3 illustrates the message flow between the user equipment and the network during a service request. At times when the user equipment needs to send or receive data, such a service request procedure is initiated.

At step S40, a non-access-stratum service request message is transmitted from the user equipment to the network. The user equipment indicates the settings of the wireless local area network interface (for example, whether it is on or off and, if it is on and is currently being used, then the Service Set Identification (SSID) is indicated).

At step S50, in the S1 application protocol layer, as this non-access-stratum message is being carried, the base station includes an indication of whether or not it supports Wi-Fi on board or not (such support would be typical for femto or small cell base stations).

At step S60, on receiving this information at the S1 application protocol and the non-access-stratum layers, the mobility management entity supporting intelligent wireless local area network traffic steering decides when the user equipment has declared support for Wi-Fi and based on local policies, whether to steer some or all of the user equipment traffic to the wireless local area network. In addition, the mobility management entity decides whether to use Non-seamless WLAN offloading (NSWO) or evolved packet system mobility modes for the packet data network connections active in the user equipment.

This is indicated to the base station in an S1 application protocol initial context set-up message at step S70.

At step S80, as the radio resource controller establishes the bearers in the evolved universal mobile telecommunications system terrestrial radio access network, an indication is provided as to whether the wireless local area network interface shall be activated and how it shall be used according to the instructions in the S1 application protocol initial context set-up request message.

The user equipment then, at step S90, uses that information to establish, if applicable, wireless local area network connectivity using the SSID provided.

### Broadcast of wireless local area network hotspots

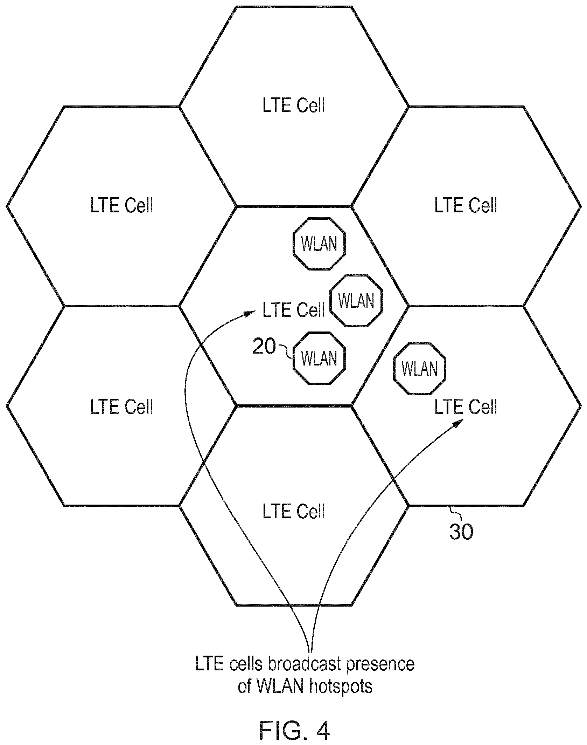

Figure 4 shows an arrangement where the cells 30 that contain wireless local area network hotspots 20 broadcast the presence of those hotspots to user equipment within the coverage area of that cell 30. The user equipment under the coverage of the cells 30 then know that there is a wireless local area network hotspot available and will turn on its wireless local area network interface.

The broadcast made by the cells 30 can provide the wireless local area network location with fine granularity, such as by way of global positioning system (GPS) coordinates. Those user equipment with a GPS receiver can then activate its wireless local area network interface when it determines it is within the coverage area identified by the broadcast made by the cell 30. This helps to further save power by only activating the wireless local area network interface when the user equipment is in the vicinity of the coverage area of the wireless local area network 20. This helps to save even more power and preserve user equipment battery.

### User equipment-specific broadcast of wireless local area network hotspots

In another embodiment, the cell 30 informs the user equipment that it is in proximity to a wireless local area network hotspot 20 using dedicated (user specific) signalling, instead of or in addition to the use of a broadcast message.

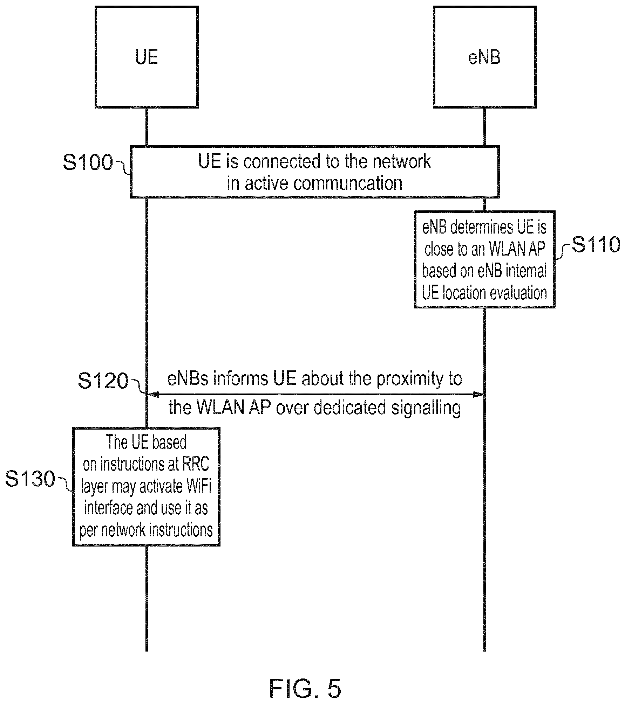

Figure 5 illustrates the message flow between the user equipment and the network during such signalling.

At step S100, the user equipment is connected to the cell 30 in active communication.

At step S110, the base station may determine the user equipment location using an algorithm. For example, the base station may use user equipment radio frequency measurement reports, round trip times for signals to and from the user equipment, the base station's own measurements, received GPS co-ordinates and the like to determine an approximate location of the user equipment.

When the base station determines that the user equipment is likely to be in proximity to a wireless local area network 20, and the base station is aware that the user equipment supports this functionality, then the base station, at step S120, provides a message to the user equipment to inform it that it is in proximity to the wireless local area network 20 and provides interface configuration information to enable the user equipment to attach to that wireless local area network 20. The network may also indicate which packet data network connections should be steered onto the wireless local area network, or these may have been indicated to the user equipment when it first attached.

At step S130, the user equipment then activates its wireless local area network interface and attempts to attach to the wireless local area network. It will be appreciated that the message provided to the user equipment from the base station may also provide an indication of the geographic location of the wireless local area network and the user equipment may check that it is in proximity to that location prior to activating its wireless local area network interface in order to prevent any unnecessary power consumption.

It will be appreciated that through these approaches, operators are provided with the ability to control the use of radio access technologies within user equipment in order to reduce power consumption within the user equipment and to steer traffic in a network-controlled manner based on network policies which may be load dependent or subscriber dependent. This enables the user equipment to utilise a single radio access technology and to be provided with signalling over that radio access technology which indicates that communication may be established using other radio access technologies that are currently inactive within the user equipment. As mentioned above, this helps to significantly reduce the power consumption of the user equipment.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method, comprising:
transmitting, using a first radio access technology communication link with user equipment, said first radio access technology communication link currently being used for at least one packet data network connection by said user equipment, a notification message notifying said user equipment that a second radio access technology communication link is available in a vicinity of said user equipment for communication of user data between said user equipment and a network node supporting said second radio access technology communication link, wherein
said notification message instructs said user equipment to activate transceiver logic within said user equipment used to support said second radio access technology communication link; and
said notification message instructs said user equipment to reallocate at least one of said at least one packet data network connection associated with said first radio access technology communication link to said second radio access technology communication link.

2. The method of claim 1, wherein the notification message instructs the user equipment to utilise the second radio access technology communication link.

3. The method of any preceding claim, wherein said notification message specifies which of said at least one packet data network connections associated with said first radio access technology communication link to reallocate to said second radio access technology communication link.

4. The method of any preceding claim, comprising:
receiving a capability indication for said user equipment indicating that it supports communication using said second radio access technology communication link and said step of transmitting occurs in response to said step of receiving.

5. The method of claim 4, wherein said notification message notifies said user equipment that a second radio access technology communication link which said capability indication indicates that said user equipment is capable of supporting is available in said vicinity of said user equipment.

6. The method of any preceding claim, comprising:
determining whether said user equipment is within a vicinity of said second radio access technology communication link and said step of transmitting occurs in response to determining that said user equipment is within said vicinity of said second radio access technology communication link.

7. The method of any preceding claim, comprising:
determining whether said user equipment is within a vicinity of said second radio access technology communication link based on location information relating to said user equipment transmitted to said network node by said user equiment.

8. The method of claim 7, wherein said location information further comprises information relating to characteristics of communications links receivable by the user equipment and said notification message notifies said user equipment that a second radio access technology communication link is available in said vicinity of said user equipment which location information indicates that said user equipment is capable of supporting.

9. The method of any preceding claim, wherein said notification message notifies said user equipment that a second radio access technology communication link is available within a specified area.

10. A network node, comprising:
transmission logic adapted to transmit, using a first radio access technology communication link with user equipment, said first radio access technology communication link currently being used by said user equipment for at least one packet data network connection, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one of said at least one packet data network connection associated with said first radio access technology communication link to said second radio access technology communication link.

11. A user equipment method, comprising:
receiving, using a first radio access technology communication link with a network node, said first radio access technology communication link currently being used for at least one packet data network connection by said user equipment, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one packet data network connection associated with said first radio access technology communication link to said second radio access technology communication link.

12. User equipment, comprising:
reception logic adapted to receive, using a first radio access technology communication link with a network node, said first radio access technology communication link currently being used for at least one packet data network connection by said user equipment, a notification message notifying said user equipment that a second radio access technology communication link is available in a vicinity of said user equipment for communication of user data between said user equipment and a network node supporting said second radio access technology communication link, said notification message instructing said user equipment to activate transceiver logic within said user equipment used to support said second radio access technology communication link and to reallocate at least one packet data network connection associated with said first radio access technology communication link to said second radio access technology communication link.

13. A computer program product operable, when executed on a computer, to perform the method steps of any one of claims 1 to 9 and 11.

## Patentansprüche

1. Netzwerkknotenverfahren, umfassend:
Übertragen, unter Verwenden eines ersten Funkzugangstechnologie-Kommunikationslinks mit Teilnehmergerät, wobei besagter erster Funkzugangstechnologie-Kommunikationslink momentan verwendet wird für mindestens eine Paketdaten-Netzwerkverbindung durch besagtes Teilnehmergerät, einer Benachrichtigungsnachricht, die besagtem Teilnehmergerät mitteilt, dass ein zweiter Funkzugangstechnologie-Kommunikationslink verfügbar ist in der Nähe besagten Teilnehmergeräts zum Mitteilen von Benutzerdaten zwischen besagtem Teilnehmergerät und einem Netzwerkknoten, der besagten zweiten Funkzugangstechnologie-Kommunikationslink unterstützt,
wobei besagte Benachrichtigungsmitteilung besagtes Teilnehmergerät anweist, eine Transceiverlogik zu aktivieren innerhalb besagten Teilnehmergeräts, die verwendet wird zum Unterstützen besagten zweiten Funkzugangstechnologie-Kommunikationslinks; und
wobei besagte Benachrichtigungsmitteilung besagtes Teilnehmergerät anweist, mindestens eine besagter mindestens einen Paketdaten-Netzwerkverbindung, die mit besagtem ersten Funkzugangstechnologie-Kommunikationslink verbunden ist, neu zuzuweisen zu besagtem zweiten Funkzugangstechnologie-Kommunikationslink.

2. Verfahren nach Anspruch 1, wobei die Benachrichtigungsmitteilung das Teilnehmergerät anweist zum Verwenden des zweiten Funkzugangstechnologie-Kommunikationslinks.

3. Verfahren nach einem beliebigen der vorhergehenden Ansprüche, wobei besagte Benachrichtigungsmitteilung spezifiziert, welche besagter mindestens einen Paketdaten-Netzwerkverbindung, die mit besagtem ersten Funkzugangstechnologie-Kommunikationslink verbunden ist, neu zuzuweisen ist zu besagtem zweiten Funkzugangstechnologie-Kommunikationslink.

4. Verfahren nach einem beliebigen der vorhergehenden Ansprüche, umfassend:
Empfangen einer Kapazitätsangabe für besagtes Teilnehmergerät, die anzeigt, dass es die Kommunikation unterstützt unter Verwenden besagten zweiten Funkzugangstechnologie-Kommunikationslinks und wobei besagter Schritt des Übertragens auftritt als Antwort auf besagten Schritt des Empfangens.

5. Verfahren nach Anspruch 4, wobei besagte Benachrichtigungsmitteilung besagtem Teilnehmergerät mitteilt, dass ein zweiter Funkzugangstechnologie-Kommunikationslink, dessen besagte Kapazitätsangabe anzeigt, dass besagtes Teilnehmergerät in der Lage ist zum Unterstützen, verfügbar ist in besagter Nähe besagten Teilnehmergeräts.

6. Verfahren nach einem beliebigen der vorhergehenden Ansprüche, umfassend:
Bestimmen, ob besagtes Teilnehmergerät sich innerhalb einer Nähe besagten zweiten Funkzugangstechnologie-Kommunikationslinks befindet und ob besagter Schritt des Übertragens auftritt als Antwort auf das Bestimmen, dass besagtes Teilnehmergerät sich innerhalb besagter Nähe besagten zweiten Funkzugangstechnologie-Kommunikationslinks befindet.

7. Verfahren nach einem beliebigen der vorhergehenden Ansprüche, umfassend:
Bestimmen, ob sich besagtes Teilnehmergerät innerhalb einer Nähe besagten zweiten Funkzugangstechnologie-Kommunikationslinks befindet auf Grundlage einer Lageinformation, die sich auf besagtes Teilnehmergerät bezieht, die auf besagten Netzwerkknoten durch besagtes Teilnehmergerät übertragen wird.

8. Verfahren nach Anspruch 7, wobei besagte Lageinformation weiterhin Information umfasst, die sich bezieht auf Eigenschaften von Kommunikationslinks, die empfangbar sind durch das Teilnehmergerät und wobei besagte Benachrichtigungsmitteilung besagtem Teilnehmergerät mitteilt, dass ein zweiter Funkzugangstechnologie-Kommunikationslink verfügbar ist in besagter Nähe besagten Teilnehmergeräts, dessen Lageinformation anzeigt, dass besagtes Teilnehmergerät in der Lage zum Unterstützen ist.

9. Verfahren nach einem beliebigen Anspruch, wobei besagte Benachrichtigungsmitteilung besagtem Teilnehmergerät mitteilt, dass ein zweiter Funkzugangstechnologie-Kommunikationslink verfügbar ist innerhalb eines spezifizierten Bereichs.

10. Netzwerkknoten, umfassend:
Übertragungslogik, die ausgelegt ist zum Übertragen, unter Verwenden eines ersten Funkzugangstechnologie-Kommunikationslinks mit Teilnehmergerät, wobei besagter erster Funkzugangstechnologie-Kommunikationslink momentan verwendet wird durch besagtes Teilnehmergerät für mindestens eine Paketdaten-Netzwerkverbindung, einer Benachrichtigungsmitteilung, die besagtem Teilnehmergerät mitteilt, dass ein zweiter Funkzugangstechnologie-Kommunikationslink verfügbar ist in einer Nähe besagten Teilnehmergeräts zum Mitteilen von Benutzerdaten zwischen besagtem Teilnehmergerät und einem Netzwerkknoten, der besagten zweiten Funkzugangstechnologie-Kommunikationslink unterstützt, wobei besagte Benachrichtigungsmitteilung besagtes Teilnehmergerät anweist, eine Transceiverlogik zu aktivieren innerhalb besagten Teilnehmergerät, die verwendet wird zum Unterstützen besagten zweiten Funkzugangstechnologie-Kommunikationslinks und zum Neuzuweisen mindestens einer besagter mindestens einen Paketdaten-Netzwerkverbindung, die verbunden ist mit besagtem ersten Funkzugangstechnologie-Kommunikationslink zu besagtem zweiten Funkzugangstechnologie-Kommunikationslink.

11. Teilnehmergerätverfahren, umfassend:
Empfangen, unter Verwenden eines ersten Funkzugangstechnologie-Kommunikationslinks mit einem Netzwerkknoten, wobei besagter erster Funkzugangstechnologie-Kommunikationslink momentan verwendet wird für mindestens eine Paketdaten-Netzwerkverbindung durch besagtes Teilnehmergerät, einer Benachrichtigungsnachricht, die besagtem Teilnehmergerät mitteilt, dass ein zweiter Funkzugangstechnologie-Kommunikationslink verfügbar ist in einer Nähe besagten Teilnehmergeräts zum Mitteilen von Benutzerdaten zwischen besagtem Teilnehmergerät und einem Netzwerkknoten, der besagten zweiten Funkzugangstechnologie-Kommunikationslink unterstützt, wobei besagte Benachrichtigungsmitteilung besagtes Teilnehmergerät anweist, eine Transceiverlogik zu aktivieren innerhalb besagten Teilnehmergeräts, die verwendet wird zum Unterstützen besagten zweiten Funkzugangstechnologie-Kommunikationslinks und zum Neuzuweisen mindestens einer Paketdaten-Netzwerkverbindung, die verbunden ist mit besagtem ersten Funkzugangstechnologie-Kommunikationslink, zu besagtem zweiten Funkzugangstechnologie-Kommunikationslink.

12. Teilnehmergerät, umfassend:
Empfangslogik, die ausgelegt ist zum Empfangen, unter Verwenden eines ersten Funkzugangstechnologie-Kommunikationslinks mit einem Netzwerkknoten, wobei besagter erster Funkzugangstechnologie-Kommunikationslink momentan verwendet wird für mindestens eine Paketdaten-Netzwerkverbindung durch besagtes Teilnehmergerät, einer Benachrichtigungsmitteilung, die besagtem Teilnehmergerät mitteilt, dass ein zweiter Funkzugangstechnologie-Kommunikationslink verfügbar ist in der Nähe besagten Teilnehmergeräts zum Mitteilen von Benutzerdaten zwischen besagtem Teilnehmergerät und einem Netzwerkknoten, der besagten zweiten Funkzugangstechnologie-Kommunikationslink unterstützt, wobei besagte Benachrichtigungsmitteilung besagtes Teilnehmergerät anweist, eine Transceiverlogik zu aktivieren innerhalb besagten Teilnehmergeräts, die verwendet wird zum Unterstützen besagten zweiten Funkzugangstechnologie-Kommunikationslinks und zum Neuzuweisen mindestens einer Paketdaten-Netzwerkverbindung, die mit besagtem ersten Funkzugangstechnologie-Kommunikationslink verbunden ist, zu besagtem zweiten Funkzugangstechnologie-Kommunikationslink.

13. Computerprogramm-Produkt, das betreibbar ist, wenn es auf einem Computer ausgeführt wird, zum Durchführen der Verfahrensschritte nach einem beliebigen der Ansprüche 1 bis 9.

## Revendications

1. Procédé de noeud de réseau, comprenant l'étape suivante :
transmettre, en utilisant une première liaison de communication à technologie d'accès radio avec un équipement utilisateur, ladite première liaison de communication à technologie d'accès radio étant actuellement utilisée pour au moins une connexion de réseau de données à commutation de paquets par ledit équipement utilisateur, un message de notification notifiant audit équipement utilisateur qu'une deuxième liaison de communication à technologie d'accès radio est disponible dans le voisinage dudit équipement utilisateur pour la communication de données utilisateur entre ledit équipement utilisateur et un noeud de réseau prenant en charge ladite deuxième liaison de communication à technologie d'accès radio, dans lequel
ledit message de notification commande audit équipement utilisateur d'activer une logique d'émetteur-récepteur au sein dudit équipement utilisateur utilisée pour prendre en charge ladite deuxième liaison de communication à technologie d'accès radio ; et
ledit message de notification commande audit équipement utilisateur de réallouer au moins l'une desdites connexions de réseau de données à commutation de paquets associées à ladite première liaison de communication à technologie d'accès radio à ladite deuxième liaison de communication à technologie d'accès radio.

2. Procédé selon la revendication 1, dans lequel le message de notification commande à l'équipement utilisateur d'utiliser la deuxième liaison de communication à technologie d'accès radio.

3. Procédé selon l'une quelconque des revendications précédentes, dans lequel ledit message de notification spécifie laquelle ou lesquelles desdites connexions de réseau de données à commutation de paquets associées à ladite première liaison de communication à technologie d'accès radio réallouer à ladite deuxième liaison de communication à technologie d'accès radio.

4. Procédé selon l'une quelconque des revendications précédentes, comprenant l'étape suivante :
recevoir une indication de capacité pour ledit équipement utilisateur indiquant qu'il prend en charge une communication utilisant ladite deuxième liaison de communication à technologie d'accès radio, ladite étape de transmission se produisant en réponse à ladite étape de réception.

5. Procédé selon la revendication 4, dans lequel ledit message de notification notifie audit équipement utilisateur qu'une deuxième liaison de communication à technologie d'accès radio que selon ladite indication de capacité ledit équipement utilisateur est capable de prendre en charge est disponible dans ledit voisinage dudit équipement utilisateur.

6. Procédé selon l'une quelconque des revendications précédentes, comprenant l'étape suivante :
déterminer si ledit équipement utilisateur est dans le voisinage de ladite deuxième liaison de communication à technologie d'accès radio, ladite étape de transmission se produisant en réponse à ladite détermination du fait que ledit équipement utilisateur est dans ledit voisinage de ladite deuxième liaison de communication à technologie d'accès radio.

7. Procédé selon l'une quelconque des revendications précédentes, comprenant l'étape suivante :
déterminer si ledit équipement utilisateur est dans le voisinage de ladite deuxième liaison de communication à technologie d'accès radio d'après des informations de localisation relatives audit équipement utilisateur transmises audit noeud de réseau par ledit équipement utilisateur.

8. Procédé selon la revendication 7, dans lequel lesdites informations de localisation comprennent en outre des informations relatives à des caractéristiques de liaisons de communication pouvant être reçues par l'équipement utilisateur et ledit message de notification notifie audit équipement utilisateur qu'une deuxième liaison de communication à technologie d'accès radio que selon les informations de localisation ledit équipement utilisateur est capable de prendre en charge est disponible dans ledit voisinage dudit équipement utilisateur.

9. Procédé selon l'une quelconque des revendications précédentes, dans lequel ledit message de notification notifie audit équipement utilisateur qu'une deuxième liaison de communication à technologie d'accès radio est disponible dans une zone spécifiée.

10. Noeud de réseau, comprenant :
une logique de transmission adaptée pour transmettre, en utilisant une première liaison de communication à technologie d'accès radio avec un équipement utilisateur, ladite première liaison de communication à technologie d'accès radio étant actuellement utilisée par ledit équipement utilisateur pour au moins une connexion de réseau de données à commutation de paquets, un message de notification notifiant audit équipement utilisateur qu'une deuxième liaison de communication à technologie d'accès radio est disponible dans le voisinage dudit équipement utilisateur pour la communication de données utilisateur entre ledit équipement utilisateur et un noeud de réseau prenant en charge ladite deuxième liaison de communication à technologie d'accès radio, ledit message de notification commandant audit équipement utilisateur d'activer une logique d'émetteur-récepteur au sein dudit équipement utilisateur utilisée pour prendre en charge ladite deuxième liaison de communication à technologie d'accès radio et de réallouer au moins l'une desdites connexions de réseau de données à commutation de paquets associées à ladite première liaison de communication à technologie d'accès radio à ladite deuxième liaison de communication à technologie d'accès radio.

11. Procédé d'équipement utilisateur, comprenant l'étape suivante :
recevoir, en utilisant une première liaison de communication à technologie d'accès radio avec un noeud de réseau, ladite première liaison de communication à technologie d'accès radio étant actuellement utilisée pour au moins une connexion de réseau de données à commutation de paquets par ledit équipement utilisateur, un message de notification notifiant audit équipement utilisateur qu'une deuxième liaison de communication à technologie d'accès radio est disponible dans le voisinage dudit équipement utilisateur pour la communication de données utilisateur entre ledit équipement utilisateur et un noeud de réseau prenant en charge ladite deuxième liaison de communication à technologie d'accès radio, ledit message de notification commandant audit équipement utilisateur d'activer une logique d'émetteur-récepteur au sein dudit équipement utilisateur utilisée pour prendre en charge ladite deuxième liaison de communication à technologie d'accès radio et de réallouer au moins une connexion de réseau de données à commutation de paquets associée à ladite première liaison de communication à technologie d'accès radio à ladite deuxième liaison de communication à technologie d'accès radio.

12. Équipement utilisateur, comprenant :
une logique de réception adaptée pour recevoir, en utilisant une première liaison de communication à technologie d'accès radio avec un noeud de réseau, ladite première liaison de communication à technologie d'accès radio étant actuellement utilisée pour au moins une connexion de réseau de données à commutation de paquets par ledit équipement utilisateur, un message de notification notifiant audit équipement utilisateur qu'une deuxième liaison de communication à technologie d'accès radio est disponible dans le voisinage dudit équipement utilisateur pour la communication de données utilisateur entre ledit équipement utilisateur et un noeud de réseau prenant en charge ladite deuxième liaison de communication à technologie d'accès radio, ledit message de notification commandant audit équipement utilisateur d'activer une logique d'émetteur- récepteur au sein dudit équipement utilisateur utilisée pour prendre en charge ladite deuxième liaison de communication à technologie d'accès radio et de réallouer au moins une connexion de réseau de données à commutation de paquets associée à ladite première liaison de communication à technologie d'accès radio à ladite deuxième liaison de communication à technologie d'accès radio.

13. Produit-programme informatique permettant, lorsqu'il est exécuté sur un ordinateur, de mettre en oeuvre les étapes selon l'une quelconque des revendications 1 à 9 et 11.
